# FASCICULE DE BREVET EUROPEEN

(11) **EP 4 079 641 B1**
(45) Date de publication et mention de la délivrance du brevet: **07.06.2023**
(21) Numéro de dépôt: 22168211.5
(22) Date de dépôt: 13.04.2022
(51) Int. Cl.: B64D 41/00, B64F 5/00, B64F 5/10, B64F 5/40, B64F 5/60, B64D 45/00

(54) **PROCÉDÉ DE POSITIONNEMENT D'UNE ÉOLIENNE DE SECOURS D'UN AÉRONEF LORS DE SON MONTAGE**
VERFAHREN ZUR POSITIONIERUNG EINER STAULUFTTURBINE EINES LUFTFAHRZEUGS BEI IHRER MONTAGE
METHOD FOR POSITIONING A RAM AIR TURBINE OF AN AIRCRAFT DURING ITS ASSEMBLY

(30) Priorité: 19.04.2021 FR 2104068
(43) Date de publication de la demande: 26.10.2022
(73) Titulaire: Airbus Operations (S.A.S.), 31060 Toulouse Cedex 9 (FR)
(72) Inventeur: AUFFRAY, Stéphane, 31060 TOULOUSE (FR); DOUSSET, Jean-Gilles, 31060 TOULOUSE (FR); MALTETE, Gildas, 31060 TOULOUSE (FR); MIGNE, Janick, 31060 TOULOUSE (FR)
(74) Mandataire: Jardel, Marc Henry Philippe

(56) Documents cités:
- US-A- 4 717 095
- US-A1- 2020 262 588
- US-B2- 9 714 098

## Description

La présente demande se rapporte à un procédé de positionnement d'une éolienne de secours d'un aéronef lors de son montage.

Selon un mode de réalisation, un aéronef comprend une éolienne de secours également appelée RAT (Ram AirTurbine en anglais), produisant l'énergie nécessaire aux systèmes vitaux de l'aéronef en cas d'urgence lors de la perte des autres sources d'énergie. Une telle éolienne de secours comprend une base fixée sur la structure primaire de l'aéronef, un mât s'étendant entre des première et deuxième extrémités, une articulation reliant la première extrémité du mât et la base ainsi qu'une turbine solidaire de la deuxième extrémité du mât. Le mât est mobile entre une position rétractée dans laquelle l'éolienne de secours est positionnée à l'intérieur du carénage de l'aéronef et une position déployée dans laquelle une partie du mât et la turbine sont positionnées à l'extérieur du carénage. Une telle éolienne de secours est par exemple divulguée dans le document US 4 717 095 A. De plus, le document US 914 098 B2 divulgue un actuateur d'une éolienne de secours avec des moyens de réglage, et le document US 2020/0262588 A1 propose de détecter un mouvement correcte d'une trappe d'un train d'atterrissage en mesurant et analysant le temps du mouvement de la trappe.

Pour permettre le passage du mât, le carénage comprend une ouverture ainsi que des trappes mobiles entre une position fermée dans laquelle elles obturent l'ouverture et une position ouverte dans laquelle elles dégagent l'ouverture. En position ouverte, les deux trappes sont espacées pour permettre au mât de pivoter. Ces trappes sont dimensionnées pour permettre le passage de l'éolienne de secours tout en étant les plus petites possibles pour limiter la prise au vent lorsqu'elles sont en position ouverte et ne pas trop impacter l'aérodynamisme de l'aéronef. Aussi, l'écartement entre l'éolienne de secours et chaque trappe lors des mouvements de déploiement et de retour est calculé au plus juste.

Lors du montage, la base de l'éolienne de secours doit être correctement positionnée par rapport à la structure primaire de l'aéronef afin que la turbine (et plus particulièrement ses pâles) n'interfère pas avec les trappes lors des mouvements de déploiement et de retour. Ce positionnement dépend essentiellement de la dextérité et du savoir-faire de l'opérateur.

La présente invention vise à remédier aux inconvénients de l'art antérieur en proposant une solution facilitant le positionnement de l'éolienne de secours lors de son montage.

A cet effet, l'invention a pour objet un procédé de positionnement d'une éolienne de secours lors de son montage sur une structure primaire d'un aéronef, l'éolienne de secours comprenant un mât configuré pour pivoter entre des positions déployée et rétractée ainsi qu'une turbine solidaire du mât et pourvue de pales, l'aéronef comprenant des première et deuxième trappes présentant chacune un bord libre et configurée pour occuper une position fermée dans laquelle les bords libres sont accolés l'un à l'autre et une position ouverte dans laquelle les bords libres sont écartés pour permettre au mât de pivoter.

Selon l'invention, le procédé de positionnement comprend :
- une étape de mise en place
   o d'un premier capteur de distance sur un premier élément parmi la première trappe et l'éolienne de secours,
   o d'un deuxième capteur de distance sur un deuxième élément parmi la deuxième trappe et l'éolienne de secours,
   o les premier et deuxième capteurs de distance étant configurés pour émettre respectivement des premier et deuxième signaux correspondant à des valeurs mesurées au cours du temps d'un écartement entre chacun des premier et deuxième capteurs de distance et au moins une cible mobile et solidaire d'un troisième élément parmi la première trappe et l'éolienne de secours différent du premier élément pour le premier capteur de distance et d'un quatrième élément parmi la deuxième trappe et l'éolienne de secours différent du deuxième élément pour le deuxième capteur de distance,
- une étape de pivotement du mât entre les positions rétractée et déployée,
- une étape d'analyse des premier et deuxième signaux, et
- si nécessaire, une étape de repositionnement de l'éolienne de secours en fonction de l'étape d'analyse des premier et deuxième signaux.

Le procédé de positionnement de l'invention permet un positionnement plus fiable et reproductible de l'éolienne de secours.

Selon une autre caractéristique, le premier signal comprend une première valeur extrême correspondant à l'écartement le plus faible entre le premier capteur de distance et la cible. En parallèle, le deuxième signal comprend une deuxième valeur extrême correspondant à l'écartement le plus faible entre le deuxième capteur de distance et la cible.

Lorsque les première et deuxième valeurs extrêmes des premier et deuxième signaux sont égales, l'éolienne de secours est correctement positionnée.

Si les première et deuxième valeurs extrêmes des premier et deuxième signaux ne sont pas égales, les étapes de pivotement du mât, d'analyse des premier et deuxième signaux ainsi que de repositionnement de l'éolienne de secours en fonction de l'étape d'analyse des premier et deuxième signaux sont répétées jusqu'à ce que les première et deuxième valeurs extrêmes des premier et deuxième signaux soient égales.

Selon une autre caractéristique, les premier et deuxième capteurs de distance sont configurés pour que chaque première ou deuxième valeur extrême du premier ou deuxième signal soit sensiblement proportionnelle à l'écartement minimal réel séparant le premier ou deuxième capteur de distance et sa cible.

Selon une autre caractéristique, le procédé de positionnement comprend une étape de détermination d'un rapport entre la première ou deuxième valeur extrême du premier ou deuxième signal et l'écartement minimal réel, une étape de comparaison des première et deuxième valeurs extrêmes et une étape de détermination, en fonction de l'étape de comparaison et connaissant le rapport, d'un sens et d'une valeur de déplacement de l'éolienne de secours pour qu'elle soit correctement positionnée.

Selon une autre caractéristique, chaque premier ou deuxième capteur de distance est un capteur à courant de Foucault.

Selon une autre caractéristique, les premier et deuxième capteurs de distance sont montés en différentiel.

Selon un premier mode de réalisation, les premier et deuxième capteurs sont fixés sur les première et deuxième trappes, au moins l'une des pales métalliques assurant la fonction de cible.

Selon un deuxième mode de réalisation, les premier et deuxième capteurs sont fixés sur l'éolienne de secours, chacune des première et deuxième trappes comprenant une cible métallique.

D'autres caractéristiques et avantages ressortiront de la description de l'invention qui va suivre, description donnée à titre d'exemple uniquement, en regard des dessins annexés parmi lesquels :
- La figure 1 est une vue latérale d'une partie d'un aéronef et d'une éolienne de secours en position rétractée,
- La figure 2 est une vue de face d'une partie de l'aéronef et de l'éolienne de secours visibles sur la figure 1,
- La figure 3 est vue en perspective des trappes du carénage d'un aéronef en position ouverte et d'une éolienne de secours en cours de déploiement,
- La figure 4 est une vue latérale d'une partie de l'aéronef et de l'éolienne de secours visibles sur la figure 1, l'éolienne de secours étant en position déployée,
- La figure 5 est une vue de face d'une partie de l'aéronef et de l'éolienne de secours visibles sur la figure 1, l'éolienne de secours étant en position déployée,
- La figure 6 est un diagramme illustrant des signaux émis par des capteurs de distance lorsque l'éolienne de secours est correctement positionnée, et
- La figure 7 est un diagramme illustrant des signaux émis par des capteurs de distance lorsque l'éolienne de secours n'est pas correctement positionnée.

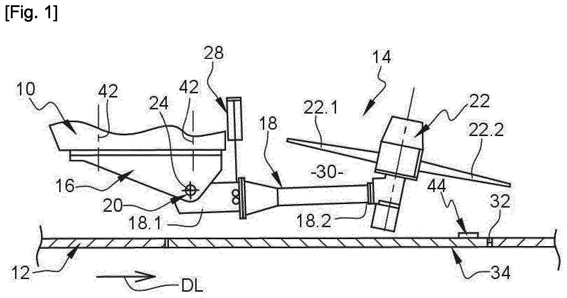

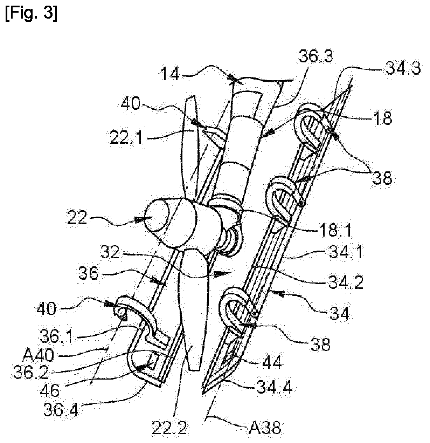

Comme illustré de manière schématique sur les figures 1 à 5, un aéronef comprend une structure primaire 10 ainsi qu'un carénage 12 enveloppant la structure primaire 10.

L'aéronef comprend également au moins une éolienne de secours 14 qui comprend une base 16 fixée sur la structure primaire 10, un mât 18 s'étendant entre des première et deuxième extrémités 18.1, 18.2, une articulation 20 reliant la première extrémité 18.1 du mât 18 et la base 16 ainsi qu'une turbine 22 solidaire de la deuxième extrémité 18.2 du mât 18. Cette turbine 22 présente des pales 22.1, 22.2, par exemple métalliques.

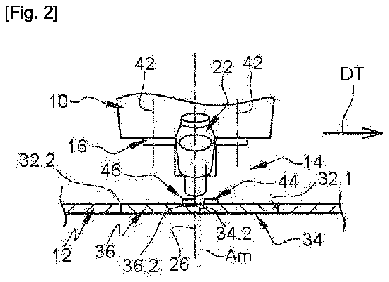

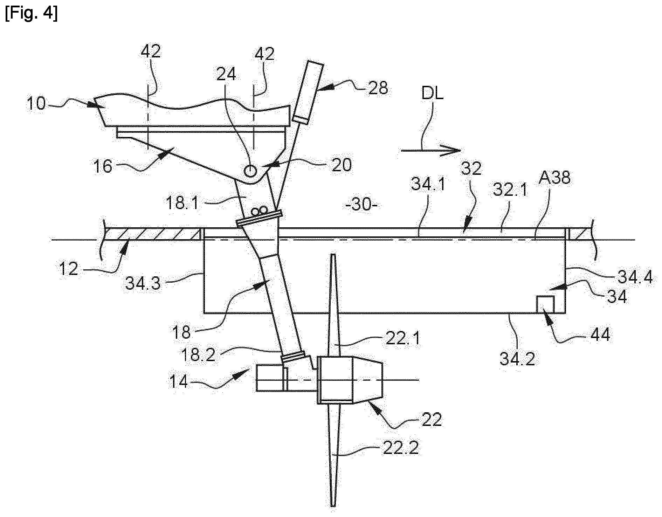

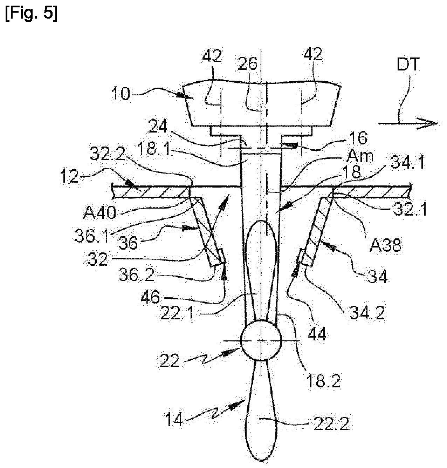

Le mât 18 est mobile entre une position rétractée, visible sur les figures 1 et 2, dans laquelle l'éolienne de secours 14 est positionnée à l'intérieur du carénage 12 de l'aéronef et une position déployée, visible sur les figures 4 et 5, dans laquelle une partie du mât 18 et la turbine 22 sont positionnées à l'extérieur du carénage 12.

Selon une configuration, l'articulation 20 est configurée pour permettre au mât 18 de pivoter autour d'un axe de pivotement 24 et de se déplacer dans un plan, appelé plan de déplacement 26, perpendiculaire à l'axe de pivotement 24. Pour la suite de la description, une direction longitudinale DL est contenue dans le plan de déplacement 26 et approximativement parallèle au carénage 12. Une direction transversale DT est perpendiculaire au plan de déplacement 26.

En complément, l'aéronef comprend un actionneur 28 pour contrôler les mouvements de pivotement du mât 18 entre les positions déployée et rétractée ainsi qu'un logement 30 à l'intérieur du carénage 12 dans lequel est positionnée l'éolienne de secours 14 en position rétractée. Pour permettre le passage du mât 18 et de la turbine 22, le carénage 12 comprend une ouverture 32 ainsi que des première et deuxième trappes 34, 36 mobiles entre une position fermée dans laquelle les première et deuxième trappes 34, 36 obturent l'ouverture 32 et une position ouverte dans laquelle les première et deuxième trappes 34, 36 dégagent l'ouverture 32.

Selon un mode de réalisation, les première et deuxième trappes 34, 36 sont en matériau composite.

Selon une configuration, l'ouverture 32 est approximativement rectangulaire et présente des premier et deuxième côtés longitudinaux 32.1, 32.2 parallèles à la direction longitudinale DL et un axe médian Am. Les première et deuxième trappes 34, 36 sont sensiblement rectangulaires et symétriques par rapport à l'axe médian Am. La première trappe 34 comprend un premier bord longitudinal 34.1 (approximativement parallèle à l'axe médian Am) relié au premier côté 32.1 de l'ouverture 32 par une première articulation 38 présentant un axe de pivotement A38 approximativement parallèle à l'axe médian Am ainsi qu'un deuxième bord libre 34.2 positionné approximativement au niveau de l'axe médian Am lorsque la première trappe 34 est en position fermée. La première trappe 34 comprend également des premier et deuxième bords transversaux 34.3, 34.4 reliant le premier bord longitudinal 34.1 et le bord libre 34.2.

La deuxième trappe 36 comprend un premier bord longitudinal 36.1 (approximativement parallèle à l'axe médian Am) relié au deuxième côté 32.2 de l'ouverture 32 par une deuxième articulation 40 présentant un axe de pivotement A40 approximativement parallèle à l'axe médian Am ainsi qu'un deuxième bord libre 36.2 positionné approximativement au niveau de l'axe médian Am lorsque la deuxième trappe 36 est en position fermée. La deuxième trappe 36 comprend également des premier et deuxième bords transversaux 36.3, 36.4 reliant le premier bord longitudinal 36.1 et le bord libre 36.2.

Lorsque les première et deuxième trappes 34, 36 sont en position fermée, comme illustré sur la figure 2, leurs deux bords libres 34.2, 36.2 sont accolés l'un contre l'autre. Les premiers bords transversaux 34.3, 36.3 des première et deuxième trappes 34, 36 sont sensiblement alignés. Il en est de même des deuxièmes bords transversaux 34.4, 36.4.

Lorsque les première et deuxième trappes 34, 36 sont en position ouverte, comme illustré sur la figure 5, les deux bords libres 34.2, 36.2 sont écartés pour permettre le passage du mât 18 et de la turbine 22 de l'éolienne de secours 14.

L'aéronef comprend des actionneurs pour déplacer les première et deuxième trappes 34, 36 de la position fermée vers la position ouverte et inversement.

L'éolienne de secours 14, les première et deuxième trappes 34, 36, les première et deuxième articulation 38, 40 ainsi que les actionneurs des première et deuxième trappes 34, 36 ne sont pas plus décrits car ils peuvent être identiques à ceux de l'art antérieur.

Le procédé de montage de l'éolienne de secours 14 consiste à la positionner correctement puis à la fixer grâce à des fixations 42 à la structure primaire 10 de l'aéronef.

Compte tenu des intervalles de tolérances de fabrication et des incertitudes de montage, les bords libres 34.2, 36.2 des première et deuxième trappes 34, 36 ne sont pas nécessairement parallèles à l'axe médian Am et symétriques par rapport à ce dernier. Par conséquent, l'étape de positionnement de l'éolienne de secours 14 consiste à positionner le plan de déplacement 26 de l'éolienne de secours 14 à équidistance des bords libres 34.2, 36.2 des première et deuxième trappes 34, 36 et non par rapport à l'axe médian Am de l'ouverture 32.

Selon un premier mode de réalisation, un procédé de positionnement de l'éolienne de secours 14 comprend une étape de mise en place d'un premier capteur de distance 44 sur la première trappe 34 et d'un deuxième capteur de distance 46 sur la deuxième trappe 36. Les premier et deuxième capteurs de distance 44, 46 sont configurés pour émettre respectivement des premier et deuxième signaux S1, S2 correspondant à des valeurs mesurées au cours du temps d'un écartement entre chacun des premier et deuxième capteurs de distance 44, 46 et au moins une cible mobile et solidaire de l'éolienne de secours 14, se déplaçant dans l'environnement desdits premier et deuxième capteurs de distance 44, 46.

Selon ce premier mode de réalisation, les premier et deuxième capteurs de distance 44, 46 sont orientés l'un vers l'autre.

Selon un deuxième mode de réalisation, les premier et deuxième capteurs de distance 44, 46 sont positionnés sur l'éolienne de secours 14, par exemple sur le mât 18 ou sur les pales 22.1, 22.2, et orientés en direction respectivement de première et deuxième cibles solidaires des première et deuxième trappes 34, 36.

Le procédé de positionnement comprend une étape de pivotement du mât 18 entre les positions rétractée et déployée, les première et deuxième trappes 34, 36 étant en position ouverte, une étape d'analyse des premier et deuxième signaux S1 et S2 ainsi qu'éventuellement une étape de repositionnement de l'éolienne de secours 14 en fonction de l'étape d'analyse des premier et deuxième signaux S1 et S2.

Lors du mouvement de pivotement du mât 18, le premier signal S1 comprend une première valeur extrême VM1 correspondant à l'écartement réel le plus faible entre le premier capteur de distance 44 et la cible. Cette première valeur extrême VM1 peut être une valeur maximale ou une valeur minimale.

En parallèle, le deuxième signal S2 comprend une deuxième valeur extrême VM2 correspondant à l'écartement réel le plus faible entre le deuxième capteur de distance 46 et la cible. Cette deuxième valeur extrême VM2 peut être une valeur maximale ou une valeur minimale.

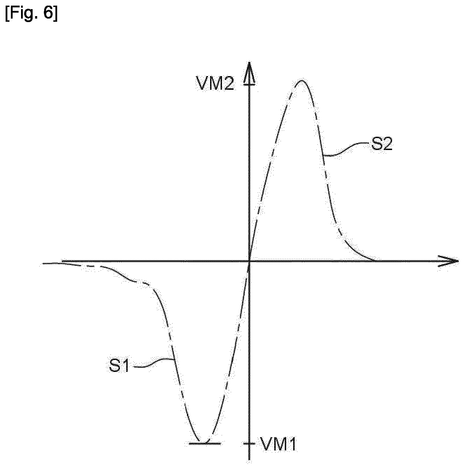

Lorsque les première et deuxième valeurs extrêmes VM1, VM2 des premier et deuxième signaux S1, S2 sont égales, comme illustré sur la figure 6, alors l'éolienne de secours 14 est correctement positionnée et peut être fixée sur la structure primaire 10 de l'aéronef.

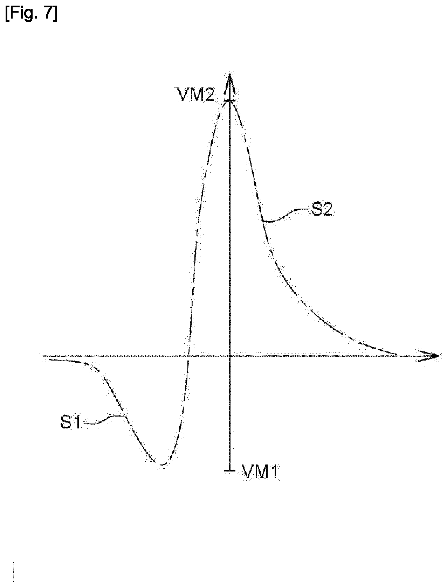

Si les première et deuxième valeurs extrêmes VM1, VM2 des premier et deuxième signaux S1, S2 ne sont pas égales, comme illustré sur la figure 7, alors l'éolienne de secours 14 n'est pas correctement positionnée. Les étapes de pivotement du mât 18, d'analyse des premier et deuxième signaux S1, S2 et de repositionnement de l'éolienne de secours 14 en fonction de l'analyse des premier et deuxième signaux S1 et S2 sont répétées jusqu'à ce que les première et deuxième valeurs extrêmes VM1, VM2 des premier et deuxième signaux S1, S2 soient égales.

Selon un mode de réalisation, chaque premier ou deuxième capteur de distance 44, 46 est un capteur à courant de Foucault. Ce type de capteur permet d'obtenir des mesures sans contact, en dynamique et dans une zone exiguë.

Lorsque les premier et deuxième capteurs de distance 44, 46 sont rapportés sur les première et deuxième trappes 34, 36, au moins l'une des pales 22.1, 22.2 métalliques assure la fonction de cible. En variante, toute autre partie métallique de l'éolienne de secours 14 ou rapportée sur l'éolienne de secours 14 pourrait assurer la fonction de cible.

Lorsque les premier et deuxième capteurs de distance 44, 46 sont rapportés sur l'éolienne de secours 14 alors, pour chacune des première et deuxième trappes 34, 36, toute partie métallique de la première ou deuxième trappe 34, 36 ou rapportée sur la première ou deuxième trappe 34, 36 assure la fonction de cible. Lorsque les première et deuxième trappes 34, 36 sont en matériau composite, une bande autocollante métallique est apposée sur chacune d'elles pour assurer la fonction de cible.

Selon un mode de réalisation, lorsque les premier et deuxième capteurs de distance 44, 46 sont rapportés sur les première et deuxième trappes 34, 36, les premier et deuxième capteurs de distance 44, 46 sont positionnés à une même distance des bords libres 34.2, 36.2 des première et deuxième trappes 34, 36. Selon une configuration, les premier et deuxième capteurs de distance 44, 46 jouxtent respectivement les bords libres 34.2, 36.2 des première et deuxième trappes 34, 36.

De plus, les premier et deuxième capteurs de distance 44, 46 sont positionnés à une même distance des premiers bords transversaux 34.3, 36.3 des première et deuxième trappes 34, 36.

Quel que soit le mode de réalisation, les premier et deuxième capteurs de distance 44, 46 sont positionnés de manière à ce que les premières et deuxième valeurs extrêmes VM1, VM2 soient les plus grandes possible en valeur absolue.

Selon une configuration, les premier et deuxième capteurs de distance 44, 46 sont montés en différentiel de manière à ce que les premier et deuxième signaux S1, S2 soient positionnés de part et d'autre d'un axe d'abscisses, comme illustré sur les figures 6 et 7. Ainsi, lorsque l'éolienne de secours 14 est correctement positionnée, les premier et deuxième signaux S1, S2 forment des lobes sensiblement symétriques par rapport à l'origine.

Selon un mode de réalisation, les premier et deuxième capteurs de distance 44, 46 sont configurés pour que chaque premier ou deuxième signal S1, S2 présente une amplitude, correspondant à la première ou deuxième valeur extrême VM1, VM2, sensiblement proportionnelle à l'écartement minimal réel séparant le premier ou deuxième capteur de distance 44, 46 et sa cible.

Selon un mode opératoire, le procédé de positionnement comprend une étape de détermination d'un rapport entre la première ou deuxième valeur extrême VM1, VM2 du premier ou deuxième signal S1, S2 et l'écartement réel mesuré en réalisant des séries de mesures avec des cales étalon.

Selon un mode opératoire, connaissant ce rapport, lors de l'analyse des premier et deuxième signaux S1, S2 le procédé de positionnement comprend une étape de comparaison des première et deuxième valeurs extrêmes VM1, VM2 ainsi qu'une étape de détermination, en fonction de la comparaison, d'un sens et d'une valeur de déplacement de l'éolienne de secours 14 pour qu'elle soit correctement positionnée.

Le procédé de positionnement de l'invention permet un positionnement plus fiable et reproductible de l'éolienne de secours 14.

## Revendications

1. Procédé de positionnement d'une éolienne de secours (14) lors de son montage sur une structure primaire (10) d'un aéronef, l'éolienne de secours (14) comprenant un mât (18) configuré pour pivoter entre des positions déployée et rétractée ainsi qu'une turbine (22) solidaire du mât (18) et pourvue de pales (22.1, 22.2), l'aéronef comprenant des première et deuxième trappes (34, 36) présentant chacune un bord libre (34.2, 36.2) et configurée pour occuper une position fermée dans laquelle les bords libres (34.2, 36.2) sont accolés l'un à l'autre et une position ouverte dans laquelle les bords libres (34.2, 36.2) sont écartés pour permettre au mât (18) de pivoter, **caractérisé en ce que** le procédé de positionnement comprend :
- une étape de mise en place d'un premier capteur de distance (44) sur un premier élément parmi la première trappe (34) et l'éolienne de secours (14), d'un deuxième capteur de distance (46) sur un deuxième élément parmi la deuxième trappe (36) et l'éolienne de secours (14), les premier et deuxième capteurs de distance (44, 46) étant configurés pour émettre respectivement des premier et deuxième signaux (S1, S2) correspondant à des valeurs mesurées au cours du temps d'un écartement entre chacun des premier et deuxième capteurs de distance (44, 46) et au moins une cible mobile et solidaire d'un troisième élément parmi la première trappe (34) et l'éolienne de secours (14) différent du premier élément pour le premier capteur de distance (44) et d'un quatrième élément parmi la deuxième trappe (36) et l'éolienne de secours (14) différent du deuxième élément pour le deuxième capteur de distance (46),
- une étape de pivotement du mât (18) entre les positions rétractée et déployée,
- une étape d'analyse des premier et deuxième signaux (S1 et S2), et
- si nécessaire, une étape de repositionnement de l'éolienne de secours (14) en fonction de l'étape d'analyse des premier et deuxième signaux (S1, S2).

2. Procédé de positionnement selon la revendication 1, **caractérisé en ce que** le premier signal (S1) comprend une première valeur extrême (VM)1 correspondant à l'écartement le plus faible entre le premier capteur de distance (44) et la cible et **en ce que** le deuxième signal (S2) comprend une deuxième valeur extrême (VM2) correspondant à l'écartement le plus faible entre le deuxième capteur de distance (46) et la cible.

3. Procédé de positionnement selon la revendication 2, **caractérisé en ce que** lorsque les première et deuxième valeurs extrêmes (VM1, VM2) des premier et deuxième signaux (S1, S2) sont égales, l'éolienne de secours (14) est correctement positionnée.

4. Procédé de positionnement selon la revendication 2, **caractérisé en ce que** si les première et deuxième valeurs extrêmes (VM1, VM2) des premier et deuxième signaux (S1, S2) ne sont pas égales, les étapes de pivotement du mât (18), d'analyse des premier et deuxième signaux (S1, S2) ainsi que de repositionnement de l'éolienne de secours (14) en fonction de l'étape d'analyse des premier et deuxième signaux (S1, S2) sont répétées jusqu'à ce que les première et deuxième valeurs extrêmes (VM1, VM2) des premier et deuxième signaux (S1, S2) soient égales.

5. Procédé de positionnement selon la revendication 2, **caractérisé en ce que** les premier et deuxième capteurs de distance (44, 46) sont configurés pour que chaque première ou deuxième valeur extrême (VM1, VM2) du premier ou deuxième signal (S1, S2) soit sensiblement proportionnelle à l'écartement minimal réel séparant le premier ou deuxième capteur de distance (44, 46) et sa cible.

6. Procédé de positionnement selon la revendication précédente, **caractérisé en ce que** le procédé de positionnement comprend une étape de détermination d'un rapport entre la première ou deuxième valeur extrême (VM1, VM2) du premier ou deuxième signal (S1, S2) et l'écartement minimal réel, une étape de comparaison des première et deuxième valeurs extrêmes (VM1, VM2) ainsi qu'une étape de détermination, en fonction de l'étape de comparaison et connaissant le rapport, d'un sens et d'une valeur de déplacement de l'éolienne de secours (14) pour qu'elle soit correctement positionnée.

7. Procédé de positionnement selon l'une des revendications précédentes, **caractérisé en ce que** chaque premier ou deuxième capteur de distance (44, 46) est un capteur à courant de Foucault.

8. Procédé de positionnement selon l'une des revendications précédentes, **caractérisé en ce que** les premier et deuxième capteurs de distance (44, 46) sont montés en différentiel.

9. Procédé de positionnement selon l'une des revendications précédentes, **caractérisé en ce que** le premier capteur (44) est fixé sur la première trappe (34) et **en ce que** le deuxième capteur (46) est fixé sur la deuxième trappe (36), au moins l'une des pales (22.1, 22.2) métalliques assurant la fonction de cible.

10. Procédé de positionnement selon l'une des revendications 1 à 9, **caractérisé en ce que** les premier et deuxième capteurs (44, 46) sont fixés sur l'éolienne de secours (14), chacune des première et deuxième trappes (34, 36) comprenant une cible métallique.

## Patentansprüche

1. Verfahren zur Positionierung einer Staudruckturbine (14) bei ihrer Montage auf eine Primärstruktur (10) eines Luftfahrzeugs, wobei die Staudruckturbine (14) einen Mast (18), der konfiguriert ist, zwischen einer ausgefahrenen und einer eingefahrenen Position zu schwenken, sowie eine fest mit dem Mast (18) verbundene und mit Schaufeln (22.1, 22.2) versehene Turbine (22) enthält, wobei das Luftfahrzeug erste und zweite Klappen (34, 36) enthält, die je einen freien Rand (34.2, 36.2) aufweisen und konfiguriert sind, eine geschlossene Position, in der die freien Ränder (34.2, 36.2) aneinandergefügt sind, und eine offene Position einzunehmen, in der die freien Ränder (34.2, 36.2) voneinander entfernt sind, um dem Mast (18) das Schwenken zu ermöglichen, **dadurch gekennzeichnet, dass** das Positionierverfahren enthält:
- einen Schritt des Anbringens eines ersten Abstandssensors (44) auf einem ersten Element unter der ersten Klappe (34) und der Staudruckturbine (14), eines zweiten Abstandssensors (46) auf einem zweiten Element unter der zweiten Klappe (36) und der Staudruckturbine (14), wobei die ersten und zweiten Abstandssensoren (44, 46) konfiguriert sind, je erste und zweite Signale (S1, S2) zu senden, die im Lauf der Zeit gemessenen Werten eines Zwischenraums zwischen jedem der ersten und zweiten Abstandssensoren (44, 46) und mindestens einem beweglichen und mit einem dritten Element unter der ersten Klappe (34) und der Staudruckturbine (14) anders als das erste Element für den ersten Abstandssensor (44) und mit einem vierten Element unter der zweiten Klappe (36) und der Staudruckturbine (14) anders als das zweite Element für den zweiten Abstandssensor (46) fest verbundenen Ziel entsprechen,
- einen Schritt des Schwenkens des Masts (18) zwischen den eingefahrenen und ausgefahrenen Positionen,
- einen Schritt der Analyse der ersten und zweiten Signale (S1 und S2), und
- wenn nötig, einen Schritt der Neupositionierung der Staudruckturbine (14) abhängig vom Analyseschritt der ersten und zweiten Signale (S1, S2).

2. Positionierverfahren nach Anspruch 1, **dadurch gekennzeichnet, dass** das erste Signal (S1) einen ersten Extremwert (VM1) entsprechend dem geringsten Zwischenraum zwischen dem ersten Abstandssensor (44) und dem Ziel enthält, und dass das zweite Signal (S2) einen zweiten Extremwert (VM2) entsprechend dem geringsten Abstand zwischen dem zweiten Abstandssensor (46) und dem Ziel enthält.

3. Positionierverfahren nach Anspruch 2, **dadurch gekennzeichnet, dass**, wenn die ersten und zweiten Extremwerte (VM1, VM2) der ersten und zweiten Signale (S1, S2) gleich sind, die Staudruckturbine (14) korrekt positioniert ist.

4. Positionierverfahren nach Anspruch 2, **dadurch gekennzeichnet, dass**, wenn die ersten und zweiten Extremwerte (VM1, VM2) der ersten und zweiten Signale (S1, $2) nicht gleich sind, die Schritte des Schwenkens des Masts (18), der Analyse der ersten und zweiten Signale (S1, S2) sowie der Neupositionierung der Staudruckturbine (14) abhängig vom Analyseschritt der ersten und zweiten Signale (S1, S2) wiederholt werden, bis die ersten und zweiten Extremwerte (VM1, VM2) der ersten und zweiten Signale (S1, S2) gleich sind.

5. Positionierverfahren nach Anspruch 2, **dadurch gekennzeichnet, dass** die ersten und zweiten Abstandssensoren (44, 46) konfiguriert sind, damit jeder erste oder zweite Extremwert (VM1, VM2) des ersten oder zweiten Signals (S1, S2) im Wesentlichen proportional zum realen minimalen Zwischenraum ist, der den ersten oder zweien Abstandssensor (44, 46) und sein Ziel trennt.

6. Positionierverfahren nach dem vorhergehenden Anspruch, **dadurch gekennzeichnet, dass** das Positionierverfahren einen Schritt der Bestimmung eines Verhältnisses zwischen dem ersten oder zweiten Extremwert (VM1, VM2) des ersten oder zweiten Signals (S1, S2) und dem realen minimalen Zwischenraum, einen Schritt des Vergleichs der ersten und zweiten Extremwerte (VM1, VM2) sowie einen Schritt der Bestimmung, abhängig vom Vergleichsschritt und in Kenntnis des Verhältnisses, einer Richtung und eines Werts der Verschiebung der Staudruckturbine (14) enthält, damit sie korrekt positioniert wird.

7. Positionierverfahren nach einem der vorhergehenden Ansprüche, **dadurch gekennzeichnet, dass** jeder erste oder zweite Abstandssensor (44, 46) ein Wirbelstromsensor ist.

8. Positionierverfahren nach einem der vorhergehenden Ansprüche, **dadurch gekennzeichnet, dass** die ersten und zweiten Abstandssensoren (44, 46) differentiell montiert werden.

9. Positionierverfahren nach einem der vorhergehenden Ansprüche, **dadurch gekennzeichnet, dass** der erste Sensor (44) an der ersten Klappe (34) befestigt ist, und dass der zweite Sensor (46) an der zweiten Klappe (36) befestigt ist, wobei mindestens eine der metallischen Schaufeln (22.1, 22.2) die Zielfunktion gewährleistet.

10. Positionierverfahren nach einem der Ansprüche 1 bis 9, **dadurch gekennzeichnet, dass** die ersten und zweiten Sensoren (44, 46) an der Staudruckturbine (14) befestigt sind, wobei jede der ersten und zweiten Klappen (34, 36) ein metallisches Ziel enthält.

## Claims

1. Method for positioning a ram air turbine (14) when mounting same on a primary structure (10) of an aircraft, the ram air turbine (14) comprising a mast (18) configured to pivot between deployed and retracted positions and a turbine (22) secured to the mast (18) and provided with blades (22.1, 22.2), the aircraft comprising first and second trapdoors (34, 36) each having a free edge (34.2, 36.2) and configured to occupy a closed position in which the free edges (34.2, 36.2) are attached to one another and an open position in which the free edges (34.2, 36.2) are separated to allow the mast (18) to pivot, **characterized in that** the positioning method comprises:
- a step of placing a first distance sensor (44) on a first element out of the first trapdoor (34) and the ram air turbine (14), a second distance sensor (46) on a second element out of the second trapdoor (36) and the ram air turbine (14), the first and second distance sensors (44, 46) being configured to respectively transmit first and second signals (S1, S2) corresponding to values measured over time of a separation between each of the first and second distance sensors (44, 46) and at least one mobile target secured to a third element out of the first trapdoor (34) and the ram air turbine (14) different from the first element for the first distance sensor (44) and to a fourth element out of the second trapdoor (36) and the ram air turbine (14) different from the second element for the second distance sensor (46),
- a step of pivoting the mast (18) between the retracted and deployed positions,
- a step of analysing the first and second signals (S1 and S2), and
- if necessary, a step of repositioning the ram air turbine (14) based on the step of analysing the first and second signals (S1, S2).

2. Positioning method according to Claim 1, **characterized in that** the first signal (S1) comprises a first extreme value (VM1) corresponding to the smallest separation between the first distance sensor (44) and the target and **in that** the second signal (S2) comprises a second extreme value (VM2) corresponding to the smallest separation between the second distance sensor (46) and the target.

3. Positioning method according to Claim 2, **characterized in that** when the first and second extreme values (VM1, VM2) of the first and second signals (S1, S2) are equal, the ram air turbine (14) is correctly positioned.

4. Positioning method according to Claim 2, **characterized in that** if the first and second extreme values (VM1, VM2) of the first and second signals (S1, S2) are not equal, the steps of pivoting the mast (18), of analysing the first and second signals (S1, S2) and of repositioning the ram air turbine (14) based on the step of analysing the first and second signals (S1, S2) are repeated until the first and second extreme values (VM1, VM2) of the first and second signals (S1, S2) are equal.

5. Positioning method according to Claim 2, **characterized in that** the first and second distance sensors (44, 46) are configured so that each first or second extreme value (VM1, VM2) of the first or second signal (S1, S2) is substantially proportional to the real minimum separation separating the first or second distance sensor (44, 46) and its target.

6. Positioning method according to the preceding claim, **characterized in that** the positioning method comprises a step of determining a ratio between the first or second extreme value (VM1, VM2) of the first or second signal (S1, S2) and the real minimum separation, a step of comparing the first and second extreme values (VM1, VM2) and a step of determining, based on the comparison step and knowing the ratio, a direction and a value of displacement of the ram air turbine (14) for it to be correctly positioned.

7. Positioning method according to one of the preceding claims, **characterized in that** each first or second distance sensor (44, 46) is an eddy current sensor.

8. Positioning method according to one of the preceding claims, **characterized in that** the first and second distance sensors (44, 46) are differentially mounted.

9. Positioning method according to one of the preceding claims, **characterized in that** the first sensor (44) is fixed onto the first trapdoor (34) and **in that** the second sensor (46) is fixed onto the second trapdoor (36), at least one of the metal blades (22.1, 22.2) ensuring the target function.

10. Positioning method according to one of Claims 1 to 9, **characterized in that** the first and second sensors (44, 46) are fixed onto the ram air turbine (14), each of the first and second trapdoors (34, 36) comprising a metal target.
